# EUROPÄISCHE PATENTSCHRIFT

(11) **EP 4 173 890 B1**
(45) Veröffentlichungstag und Bekanntmachung des Hinweises auf die Patenterteilung: **10.09.2025**
(21) Anmeldenummer: 22205084.1
(22) Anmeldetag: 02.11.2022
(51) Int. Cl.: B60N 2/809, B60N 2/64, B60N 2/58, B60N 2/90

(54) **KOPFSTÜTZE FÜR EINE RÜCKENLEHNE UND RÜCKENLEHNE**
HEADREST FOR A BACKREST AND BACKREST
APPUI-TÊTE POUR DOSSIER ET DOSSIER

(30) Priorität: 02.11.2021 DE 102021212328; 14.04.2022 DE 102022203795
(43) Veröffentlichungstag der Anmeldung: 03.05.2023
(73) Patentinhaber: Adient US LLC, Plymouth, MI 48170 (US)
(72) Erfinder: WEIß, Volker, 50354 Hürth (DE)
(74) Vertreter: Liedtke & Partner Patentanwälte

(56) Entgegenhaltungen:
- EP-B1- 2 154 020
- DE-A1- 102012 204 813

## Beschreibung

Die Erfindung betrifft eine Kopfstütze, die insbesondere an mindestens einer Haltestange in einer Rückenlehne eines Fahrzeugsitzes vorgesehen ist, wobei ein Grundkörper an der Haltestange anordenbar ist. Des Weiteren betrifft die Erfindung eine Rückenlehne mit einer solchen Kopfstütze.

Aus der EP 2 154 020 B1 ist eine Kopfstütze bekannt, dessen Grundkörper mit einer Ausnehmung versehen ist, welche mit Blenden zumindest teilweise ausgekleidet ist.

Aus der DE 10 2012 204 813 A1 ist ein Fahrzeugsitz mit einer integrierten Kopfstütze bekannt. Die Kopfstütze ist mittels eines Adapterbauteils form-, stoff- und/oder kraftschlüssig an einem oberen Abschnitt einer Sitzlehnenstruktur angeordnet.

Aus dem Stand der Technik sind Rückenlehnen bekannt, die mit Öffnungen versehen sind. Beispielsweise sind die Öffnungen zum Durchführen eines Sicherheitsgurts und/oder zur Belüftung und/oder als Zierelement vorgesehen. Um Sicherheitsanforderungen zu erfüllen, sind auf scharfe Kanten von Öffnungsauskleidungen zu achten.

Aufgabe der vorliegenden Erfindung ist es, eine gegenüber dem Stand der Technik verbesserte Kopfstütze anzugeben, welche insbesondere hinsichtlich Sicherheitsanforderungen verbesserte Konturen aufweist. Eine weitere Aufgabe der vorliegenden Erfindung ist es, eine gegenüber dem Stand der Technik verbesserte Rückenlehne mit einer solchen Kopfstütze anzugeben, welche hinsichtlich Komfortanforderungen und Sicherheitsanforderungen verbesserte Konturen aufweist.

Hinsichtlich der Kopfstütze wird die Aufgabe erfindungsgemäß mit den angegebenen Merkmalen des Anspruchs 1 gelöst. Hinsichtlich der Rückenlehne wird die Aufgabe erfindungsgemäß mit den angegebenen Merkmalen des Anspruchs 14 gelöst.

Die Aufgabe wird erfindungsgemäß mit einer Kopfstütze gelöst, welche einen Grundkörper und mindestens eine Haltestange aufweist, an welchem der Grundkörper anordenbar oder angeordnet ist, wobei mindestens ein Tragrahmen vorgesehen ist, der derart ausgebildet ist und an der Haltestange und/oder im Bereich des Grundkörpers, beispielsweise an und/oder in dem Grundkörper, derart anordenbar oder angeordnet ist, dass eine Durchgangsöffnung gebildet ist, welche mit einer ersten Blende und einer zweiten Blende zumindest teilweise ausgekleidet ist.

Der Tragrahmen weist insbesondere eine sich in Längsausdehnungsrichtung der Kopfstütze erstreckende Durchgangsöffnung auf.

Die Durchgangsöffnung ist beispielsweise zur Durchführung eines Sicherheitsgurts vorgesehen. Mittels der Blenden ist die Durchgangsöffnung und somit die Kopfstütze, die Rückenlehne, insbesondere der Fahrzeugsitz, optisch aufwertbar oder aufgewertet.

Die Blenden können unterschiedliche Dekorationselemente, Zierelemente, Farben, Muster und/oder Beschichtungen aufweisen. Die Durchgangsöffnung ist beispielsweise zur Belüftung des Fahrzeugsitzes vorgesehen. Mittels der Blenden, insbesondere deren Formen und/oder Abmessungen, kann beispielsweise eine über die Durchgangsöffnung erfolgende Luftzirkulation zur Temperaturregulation verbessert werden.

Des Weiteren weisen die Blenden an Blendenenden, die beispielsweise in Richtung eines Insassen und/oder in Richtung eines hinter dem entsprechenden Fahrzeugsitz sitzenden Insassen gerichtet sind, auf, die derart abgerundet und/oder abgekantet sind, dass diese Sicherheitsbestimmungen und Sicherheitsnormen entsprechen, beispielsweise gemäß der Norm ECE R17. Auch Öffnungsenden des Tragrahmens sind derart abgerundet und/oder abgekantet, dass diese den Sicherheitsbestimmungen und den Sicherheitsnormen entsprechen, beispielsweise gemäß der Norm ECE R17.

Darüber hinaus sind die Blenden als ästhetische Abdeckungen zur optischen Aufwertung des Fahrzeugsitzes und des Tragrahmens ausgebildet. Der Fahrzeugsitz ist beispielsweise ein Sportsitz.

In einer weiteren Ausführungsform ist der Tragrahmen im Grundkörper angeordnet. Beispielsweise ist der Tragrahmen im Grundkörper derart angeordnet, dass dieser sich durch den Grundkörper hindurch erstreckt. Der Grundkörper ist beispielsweise als ein in die Rückenlehne integrierte oder integrierbare Kopfstütze ausgebildet.

In einer weiteren Ausführungsform ist der Tragrahmen beispielsweise unterhalb des Grundkörpers an Stangenenden der Haltestange angeordnet. Die Haltestange ist beispielsweise als ein U-Profil ausgebildet.

In einer weiteren Ausführungsform ist der Tragrahmen an einer Unterseite des Grundkörpers angeordnet. Beispielsweise ist der Tragrahmen an der Unterseite des Grundkörpers lösbar oder unlösbar befestigt. Der Tragrahmen ist beispielsweise in einen oberen Rückenlehnenbereich integriert oder integrierbar. Der Tragrahmen ist beispielsweise in einem Nackenbereich und/oder Schulterbereich der Rückenlehne und/oder einer mit der Rückenlehne integral ausgebildeten Kopfstütze angeordnet oder anordenbar. Alternativ weist die Kopfstütze ein Kopfstützenpolster auf, das ausgebildet ist, den Grundkörper und den Tragrahmen vollständig aufzunehmen.

Abmessungen und/oder Formen des Tragrahmens entsprechen beispielsweise Abmessungen und/oder Formen des Grundkörpers und/oder der Rückenlehne.

In einer weiteren Ausführungsform ist der Tragrahmen zwischen zwei, insbesondere sich parallel gegenüberliegenden, Stangenenden der Haltestange angeordnet, wobei die Durchgangsöffnung sich zwischen den Stangenenden der Haltestange erstreckt. Beispielsweise erstreckt sich die Durchgangsöffnung im Wesentlichen senkrecht zu den Stangenenden.

In einer weiteren Ausführungsform ist der Tragrahmen im Bereich des Grundkörpers, beispielsweise am und/oder im Grundkörper, derart angeordnet, dass die Durchgangsöffnung sich in Längsausdehnungsrichtung des Grundkörpers erstreckt. Die Durchgangsöffnung erstreckt sich beispielsweise durch den gesamten Querschnitt des Grundkörpers und/oder zwischen zwei Stangenenden der Haltestange. Beispielsweise erstreckt sich die Durchgangsöffnung zwischen zwei Außenflächen, beispielsweise Auflageflächen, des Grundkörpers. Beispielsweise erstreckt sich die Durchgangsöffnung zwischen zwei Außenflächen, beispielsweise Auflageflächen, der Kopfstütze und/oder der Rückenlehne.

In einer Weiterbildung weist der Tragrahmen zumindest eine in Längsausdehnungsrichtung des Grundkörpers größere Abmessung auf. Beispielsweise ragt zumindest ein Öffnungsende des Tragrahmens über eine Außenfläche des Grundkörpers, der Kopfstütze und/oder der Rückenlehne hinaus.

Die Kopfstütze und/oder Rückenlehne weist damit eine Durchgangsöffnung auf, welche sich durch deren gesamten Querschnitt erstreckt, insbesondere in Längsrichtung von vorne nach hinten, so dass man durch die Kopfstütze und/oder Rückenlehne hindurchsehen kann.

Dabei sind die erste Blende und die zweite Blende derart in der Durchgangsöffnung angeordnet, dass deren Blendenenden innerhalb der Durchgangsöffnung angeordnet sind. Insbesondere sind die Blendenenden in einem Abstand zu den Öffnungsenden der Durchgangsöffnung angeordnet.

Darüber hinaus weist die Durchgangsöffnung an ihren Öffnungsenden Öffnungsränder mit einem Radius von gleich oder größer 2,5 mm, insbesondere von 5 mm, auf. Nach der Norm ECE R17 müssen Bauteile, die sich im Kopfstützenbereich befinden, Radien gleich oder größer als 2,5 mm aufweisen. Die Blenden weisen beispielsweise aus ästhetischen Gründen Radien kleiner als 2,5 mm auf. Um dennoch die Anforderungen der Norm ECE R17 zu erfüllen, ist der zusätzliche und separate Tragrahmen vorgesehen. Der Tragrahmen verhindert einen Kontakt und/oder eine Berührung an den sichtbaren, insbesondere im Bereich der Öffnungsenden der Durchgangsöffnung angeordneten, Blendenenden. Solche Kontaktpunkte und/oder Berührungspunkte werden beispielsweise mittels Kugeln mit einem Durchmesser von 165 mm ermittelt.

Die Blenden können demgegenüber an ihren Blendenenden Blendenränder mit einem kleineren Radius aufweisen.

Die Blenden sind insbesondere aus Kunststoff gefertigt. Der Tragrahmen ist insbesondere aus Kunststoff gefertigt.

In einer weiteren Ausführungsform weist zumindest eine der Blenden einen Blendenkörper auf, welcher zumindest eine Ausnehmung aufweist. Die Ausnehmung ist beispielsweise eine Durchgangsöffnung. Beispielsweise ist die zumindest eine Blende als ein Blendenrahmen ausgebildet.

In einer Weiterbildung sind die Blenden weitestgehend identisch ausgebildet.

In einer weiteren Ausführungsform weist ein erstes Blendenende des Blendenkörpers der zumindest einen Blende einen größeren Umfang als ein zweites Blendenende des gleichen Blendenkörpers auf. Der Blendenkörper ist beispielsweise als ein konisch zulaufender Körper ausgebildet. Beispielsweise ist der Blendenkörper im Wesentlichen kegelförmig ausgebildet.

In einer möglichen Ausführungsform ist zumindest eine der Blenden, insbesondere rastend, mit dem Tragrahmen und/oder dem Grundkörper verbunden.

Gemäß einer weiteren Ausführungsform ist eine der beiden Blenden, insbesondere rastend, mit der anderen Blende verbunden. Beispielsweise sind die miteinander, insbesondere rastend, verbundenen Blendenenden in einem, in Längsausdehnungsrichtung gesehen, mittleren Bereich der Durchgangsöffnung angeordnet.

Zum Beispiel werden die beiden Blenden teilweise ineinandergeschoben, bevor sie eine beispielsweise rastende Verbindung eingehen. Beispielsweise ist eine Blende in die andere Blende zumindest bereichsweise eingeschoben. Zusätzlich können die beiden Blenden auf Stoß angeordnet sein. Hierdurch sind Fertigungstoleranzen leicht ausgleichbar. Darüber hinaus eignen sich die Blenden für verschiedene Formen von Durchgangsöffnungen oder Ausnehmungen.

Die erfindungsgemäße Kopfstütze weist in der Regel eine Polsterung, beispielsweise an allen Seiten, auf, die wiederum von einem Bezug überzogen ist. Beispielsweise ist der Bezug zumindest teilweise in der Ausnehmung oder Durchgangsöffnung befestigt.

Gemäß einer weiteren Ausführungsform der vorliegenden Erfindung ist der Bezug zumindest teilweise an einer der beiden Blenden angeordnet. Dies kann beispielsweise durch einen Form-, Kraft- und/oder Stoffschluss erfolgen.

Eine weitere Ausführungsform sieht vor, dass der Bezug an dem Grundkörper angeordnet ist.

Beispielsweise umschließt der Grundkörper die Haltestangen zumindest teilweise. Insbesondere werden die Haltestangen beim Gießen, Spritzen oder Spritzgießen des Grundkörpers beispielsweise zumindest teilweise von dem Werkstoff des Grundkörpers umschlossen.

Die mit der Erfindung erzielten Vorteile bestehen insbesondere darin, dass eine solche Kopfstütze mit einem solchen Tragrahmen mit innenliegenden Blenden im Bereich der Durchgangsöffnung äußere abgerundete Konturen aufweist, welche die Sicherheitsanforderungen nach Norm ECE R17 erfüllen.

Eine erfindungsgemäße Rückenlehne für einen Sitz, insbesondere Fahrzeugsitz, umfasst zumindest eine Tragstruktur und eine an der Tragstruktur angeordnete Kopfstütze nach vorheriger Beschreibung.

In einer weiteren Ausführungsform ist der Tragrahmen zwischen einem oberen Ende der Tragstruktur und einem unteren Ende des Grundkörpers angeordnet.

Der Sitz, insbesondere Fahrzeugsitz, kann einer oder mehreren Personen Platz bieten. Es kann sich demnach bei dem Fahrzeugsitz auch um eine Sitzbank handeln. Die Kopfstütze ist mittels der Haltestange an der Rückenlehne des Fahrzeugsitzes, beispielsweise verstellbar, befestigt. Die Kopfstütze bildet beispielsweise gemeinsam mit der Rückenlehne eine durchgängige Außenfläche, insbesondere Auflagefläche, für einen Insassen. Eine Rückseite der Rückenlehne mit einer solchen Kopfstütze weist ebenfalls eine durchgängig ausgebildete Außenfläche auf, wobei die Durchgangsöffnung sich durch den gesamten Querschnitt zwischen den Außenflächen erstreckt, so dass man durch die Kopfstütze und/oder die Rückenlehne hindurchsehen kann.

Ausführungsbeispiele der Erfindung werden anhand von Zeichnungen näher erläutert. Dabei zeigen:
- Figur 1: eine Vorderansicht eines Fahrzeugsitzes mit einer Kopfstütze und einer Durchgangsöffnung im Bereich der Kopfstütze und einer Rückenlehne von vorne,
- Figur 2: eine Seitenansicht eines Fahrzeugsitzes,
- Figur 3: in perspektivischer Darstellung und teilweise Explosionsdarstellung eine Ausführungsform für eine Tragstruktur eines Fahrzeugsitzes,
- Figur 4: im Vertikalschnitt die Durchgangsöffnung der Kopfstütze,
- Figur 5: im zusammengesetzten Zustand einen Tragrahmen und zwei Blenden für die Durchgangsöffnung, und
- Figur 6: eine Vorderansicht eines Fahrzeugsitzes mit einer Kopfstütze und einer Durchgangsöffnung von vorne.

Einander entsprechende Teile sind in allen Figuren mit den gleichen Bezugszeichen versehen.

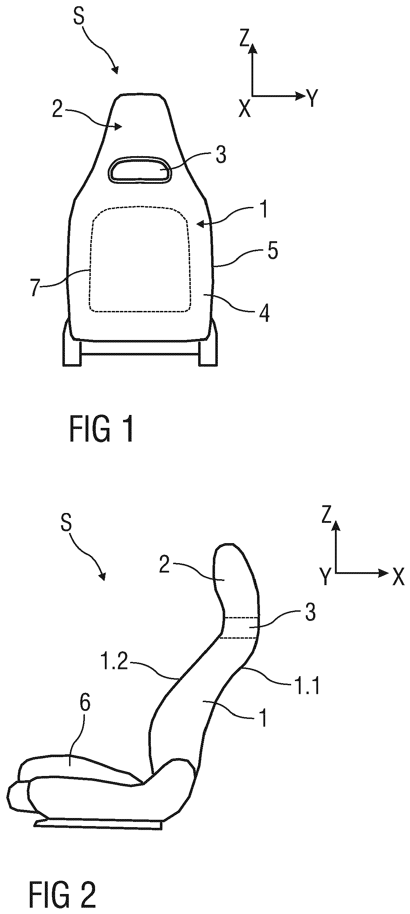

Ein in der **Figur 1** schematisch dargestellter Fahrzeugsitz S wird nachfolgend unter Verwendung von drei senkrecht zueinander verlaufenden Raumrichtungen beschrieben. Eine Längsrichtung X verläuft bei einem im Fahrzeug eingebauten Fahrzeugsitz S weitgehend horizontal und beispielsweise parallel zu einer Fahrzeuglängsrichtung, die der gewöhnlichen Fahrtrichtung des Fahrzeugs entspricht. Eine zu der Längsrichtung X senkrecht verlaufende Querrichtung Y ist im Fahrzeug ebenfalls horizontal ausgerichtet und verläuft parallel zu einer Fahrzeugquerrichtung. Eine Vertikalrichtung Z verläuft senkrecht zu der Längsrichtung X und senkrecht zu der Querrichtung Y. Bei einem im Fahrzeug eingebauten Fahrzeugsitz S verläuft die Vertikalrichtung Z beispielsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz S sitzenden Insassen in normaler Sitzposition, wobei der Fahrzeugsitz S im Fahrzeug eingebaut, in einer zur Personenbeförderung geeigneten Gebrauchsposition mit aufrecht stehender Rückenlehne 1 und wie üblich in Fahrtrichtung ausgerichtet ist. Der Fahrzeugsitz S kann jedoch auch in abweichender Ausrichtung, beispielsweise quer zur Fahrtrichtung, verbaut oder bewegt werden.

**Figur 1** zeigt eine Vorderansicht des Fahrzeugsitzes S. Der Fahrzeugsitz S umfasst die Rückenlehne 1 und eine an der Rückenlehne 1 vorgesehene Kopfstütze 2. Im Bereich der Kopfstütze 2 umfasst der Fahrzeugsitz S eine Durchgangsöffnung 3.

Der Fahrzeugsitz S, insbesondere die Rückenlehne 1 und die Kopfstütze 2 weisen in der Regel eine Polsterung 4, beispielsweise an allen Seiten, auf. Die Polsterung 4 kann wiederum von einem Bezug 5 überzogen sein. Beispielsweise ist der Bezug 5 zumindest teilweise in der Durchgangsöffnung 3 befestigt.

Der Fahrzeugsitz S umfasst darüber hinaus eine gestrichelt dargestellte Tragstruktur 7, insbesondere eine Profilrahmenstruktur und/oder eine Stangenstruktur, für die Rückenlehne 1 und die Kopfstütze 2.

**Figur 2** zeigt eine Seitenansicht des Fahrzeugsitzes S. Die Durchgangsöffnung 3 erstreckt sich durch den gesamten Querschnitt in Längsrichtung X der Kopfstütze 2 von vorne nach hinten, so dass man durch die Kopfstütze 2 hindurchsehen kann.

Der Fahrzeugsitz S umfasst darüber hinaus ein Sitzteil 6, an welchem die Rückenlehne 1 angeordnet ist, insbesondere drehbar angeordnet ist.

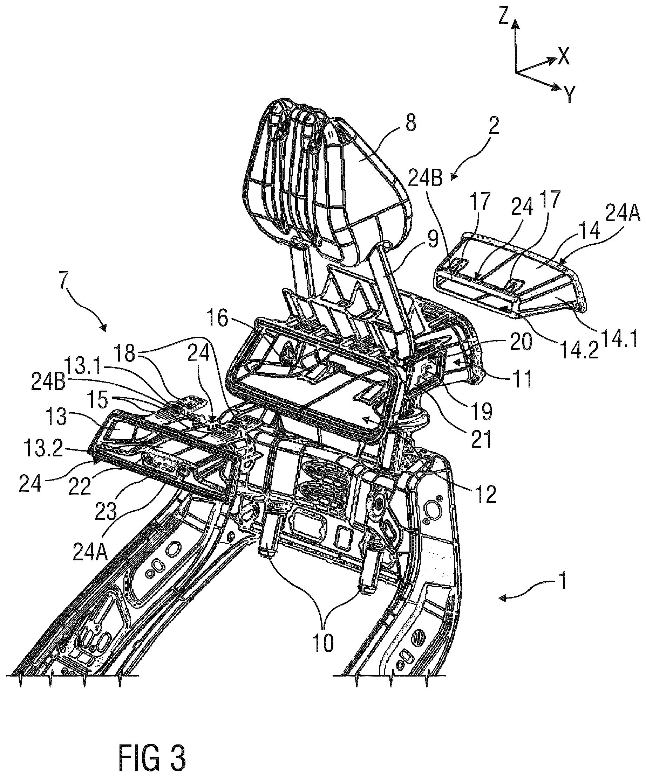

Ein Tragrahmen 11, wie in Figur 3 gezeigt, zur Bereitstellung beziehungsweise Ausbildung der Durchgangsöffnung 3 erstreckt sich durch die Polsterung 4. Beispielsweise erstreckt sich die Durchgangsöffnung 3 von einer hinteren Außenseite 1.1, beispielsweise Rückseite, zu einer vorderen Außenseite 1.2, beispielsweise Auflageflächenseite für einen Insassen.

**Figur 3** zeigt in perspektivischer Darstellung und teilweise Explosionsdarstellung eine Ausführungsform für eine Tragstruktur 7 des Fahrzeugsitzes S.

Die erfindungsgemäße Kopfstütze 2 umfasst einen Grundkörper 8 und mindestens eine Haltestange 9. Die Haltestange 9 kann als ein u-förmiger Bügel mit zwei Stangenenden 10 oder als zwei separate Haltestangen 9 ausgebildet sein.

Der Grundkörper 8 ist an der Haltestange 9 angeordnet.

Zusätzlich umfasst die Kopfstütze 2 mindestens einen Tragrahmen 11, der an der Haltestange 9 und/oder dem Grundkörper 8 angeordnet sein kann. Im Ausführungsbeispiel ist der Tragrahmen 11 an der Haltestange 9 zwischen den Stangenenden 10 angeordnet.

Insbesondere ist der Tragrahmen 11 derart ausgebildet und an der Haltestange 9 und/oder dem Grundkörper 8 anordenbar, dass die Durchgangsöffnung 3 der Kopfstütze 2 gebildet ist.

Der Tragrahmen 11 ist als ein Hohlprofil oder Hohlkörper mit einem Hohlraum 12 ausgebildet, der die Durchgangsöffnung 3 bildet. Der Hohlraum 12 erstreckt sich durch den gesamten Querschnitt der Kopfstütze 2, insbesondere durch deren Grundkörper 8, wenn der Tragrahmen 11 in einer Ausnehmung des Grundkörpers 8 (nicht dargestellt) und/oder zwischen den zwei Stangenenden 10 der Haltestange 9 angeordnet ist.

Beispielsweise ist der Tragrahmen 11 aus Kunststoff gefertigt.

Der Tragrahmen 11, insbesondere dessen Hohlraum 12, ist mit einer ersten Blende 13 und einer zweiten Blende 14 zumindest teilweise ausgekleidet.

Somit erstreckt sich die Durchgangsöffnung 3 der Kopfstütze 2 durch den gesamten Querschnitt der Kopfstütze 2 und ist mittels der beiden Blenden 13 und 14 zumindest teilweise ausgekleidet.

Die beiden Blenden 13, 14 sind insbesondere aus Kunststoff gefertigt.

Die Blenden 13, 14 weisen jeweils einen Blendenkörper 13.1, 14.1 auf. Die Blendenkörper 13.1, 14.1 sind beispielsweise jeweils in Form eines Blendenrahmens mit einer durchgängigen Ausnehmung 13.2, 14.2 ausgebildet. Die Ausnehmungen 13.2, 14.2 sind beispielsweise Durchgangsöffnungen.

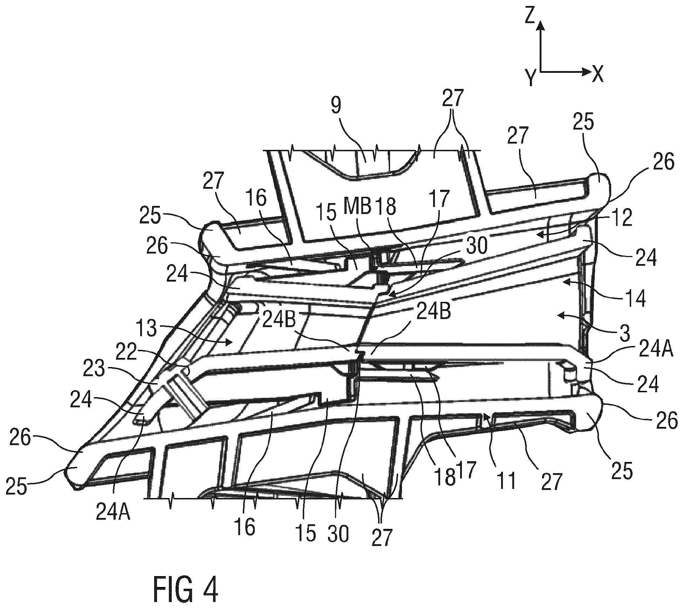

Die Blendenkörper 13.1, 14.1 sind konisch zulaufend ausgebildet. Jeder Blendenkörper 13.1, 14.1 umfasst ein erstes Blendenende 24, 24A und ein zweites Blendenende 24, 24B. Das jeweilige erste Blendenende 24, 24A ist sichtbar an jeweils einem Öffnungsende 25 des Tragrahmens 11, insbesondere der Durchgangsöffnung 3, angeordnet. Das jeweilige zweite Blendenende 24, 24B ist innerhalb, insbesondere in einem im Wesentlichen mittleren Bereich MB, wie in **Figur 4** zu sehen, der des Tragrahmens 11, insbesondere der Durchgangsöffnung 3, angeordnet.

Das jeweilige erste Blendenende 24, 24A der Blendenkörper 13.1, 14.1 weist einen größeren Umfang als das jeweilige zweite Blendenende 24, 24B der Blendenkörper 13.1, 14.1 auf.

In einer möglichen Ausführungsform ist zumindest eine der Blenden 13, insbesondere rastend, mit dem Tragrahmen 11 verbunden. Hierzu weist die erste Blende 13 entsprechende erste Rastelemente 15, insbesondere Rastvorsprünge, auf, welche in korrespondierende zweite Rastelemente 16, insbesondere Rastzungen, des Tragrahmens 11 im zusammengebauten Zustand rastend eingreifen.

Im Ausführungsbeispiel sind Paare von ersten und zweiten Rastelementen 15, 16 oben und unten auf der Innenseite des Tragrahmens 11 und auf der Außenseite der ersten Blende 13 vorgesehen.

Darüber hinaus ist die zweite Blende 14, insbesondere rastend, mit der ersten Blende 13 verbunden. Hierzu weist die zweite Blende 14 beispielsweise auf ihrer Außenseite dritte Rastelemente 17 auf, die in korrespondierende vierte Rastelemente 18, insbesondere Rastöffnungen, im zusammengebauten Zustand rastend eingreifen.

Die Blendenkörper 13.1, 14.1 sind innerhalb des Tragrahmens 11, insbesondere innerhalb der Durchgangsöffnung 3, miteinander verbunden. Beispielsweise sind jeweils die inneren, zweiten Blendenenden 24B über eine Steckverbindung 30, wie in **Figur 4** dargestellt, miteinander verbunden. Insbesondere ist ein Blendenkörper 13.1, 14.1 einer der Blenden 13, 14 in den anderen Blendenkörper 13.1, 14.1 der weiteren Blende 13, 14 bereichsweise eingeschoben, insbesondere eingesteckt. Im verbundenen Zustand der Blendenkörper 13.1, 14.1 sind die Ausnehmungen 13.2, 14.2 derart miteinander verbunden, dass diese eine durchgängige Öffnung, insbesondere Durchgangsöffnung 3, ausbilden. Die miteinander verbundene Ausnehmungen 13.2, 14.2 erstrecken sich durch den gesamten Querschnitt der Kopfstütze 2 und/oder Rückenlehne 1.

Zur Befestigung des Tragrahmens 11 an der Haltestange 9 sind seitlich in den Tragrahmen 11 Befestigungselemente 19 vorgesehen. Zur Vermeidung von scharfen Kanten ist eine Befestigungskappe 20 vorgesehen, die zwischen Tragrahmen 11 und Kopf der Befestigungselemente 19 angeordnet ist. Die Befestigungskappe 20 weist einen vom Tragrahmen 11 wegweisenden und von diesem hochstehenden gerundeten Kappenrand 21 auf. Der Kappenrand 21 weist eine solche abstehende Höhe auf, die höher ist als die Höhe des Kopfes des Befestigungselements 19. Der Radius des gerundeten Kappenrandes 21 ist gleich oder größer 2,5 mm, insbesondere beträgt der Radius 5 mm.

Die erste Blende 13 kann zusätzlich eine Ausnehmung 22 zur Aufnahme und Halterung eines Funktionselements 23, wie eines Schriftzuges, eines Leuchtmittels, umfassen.

**Figur 4** zeigt im Vertikalschnitt die Durchgangsöffnung 3 der Kopfstütze 2.

Die Durchgangsöffnung 3 erstreckt sich durch den gesamten Querschnitt des Tragrahmens 11 und damit der Kopfstütze 2.

Die Kopfstütze 2 weist damit eine durchgehende Öffnung auf, so dass man durch die Kopfstütze 2 hindurchsehen kann.

Dabei sind die erste Blende 13 und die zweite Blende 14 derart in der Durchgangsöffnung 3, insbesondere in dem Hohlraum 12 des Tragrahmens 11, angeordnet, dass deren Blendenenden 24 innerhalb des Hohlraums 12 des Tragrahmens 11 und damit auch innerhalb der Durchgangsöffnung 3 angeordnet sind. Insbesondere sind die Blendenenden 24 der beiden Blenden 13, 14 in einem Abstand zu den Öffnungsenden 25 der Durchgangsöffnung 3, insbesondere des Hohlraums 12, angeordnet.

Darüber hinaus weist die Durchgangsöffnung 3, insbesondere der Hohlraum 12, an ihren Öffnungsenden 25 gerundete Öffnungsränder 26 mit einem Radius von gleich oder größer 2,5 mm, insbesondere von 5 mm, auf.

Solche gerundeten Öffnungsränder 26 im Kopfstützenbereich erfüllen dabei insbesondere die Norm nach ECE R17, wonach Bauteile, die sich im Kopfstützenbereich befinden, Radien gleich oder größer 2,5 mm (Energieableitungstest erforderlich) oder besser 5 mm (kein Energieableitungstest erforderlich) aufweisen, wenn sie mit einer Kugel mit 165 mm Durchmesser berührt werden können. Sitzkomponenten mit einer Härte von weniger als 50 Shore-A werden bei dieser Bewertung nicht berücksichtigt (z. B. Schaumstoff und Zierleisten).

Um die Testanforderungen an die Radien zu erfüllen, sieht die Erfindung den Tragrahmen 11 vor, der verhindert, dass beim Test die Kugel mit 165 mm Durchmesser die inneren Blenden 13, 14 berühren kann. Dieser Tragrahmen 11 sorgt überall dort, wo die 165mm-Kugel sie berühren kann, für die geforderten Radien größer als 2,5mm.

Die nach innen versetzten und im Tragrahmen 11 angeordneten und befestigten Blenden 13, 14 können demgegenüber an ihren Blendenenden 24 Blendenränder mit einem kleineren Radius aufweisen.

Ein Abstand zwischen Blendenenden 24, 24A und den Öffnungsenden 25 und/oder den gerundeten Öffnungsrändern 26 ist derart gewählt, dass beispielsweise ein durch die Kopfstütze bildbarer Aufschlagbereich im Fall eines Unfalls einem Sicherheitsstandard, insbesondere dem der Regelung nach ECE R17, entspricht. Im Fall eines Unfalls wird eine unmittelbare Berührung des Kopfes mit den Blendenenden 24, 24A weitestgehend vermieden.

Beispielsweise werden die beiden Blenden 13, 14 teilweise ineinandergeschoben, bevor sie eine beispielsweise rastende Verbindung eingehen. Zusätzlich können die beiden Blenden 13, 14 auf Stoß angeordnet sein. Hierdurch sind Fertigungstoleranzen leicht ausgleichbar. Darüber hinaus eignen sich die Blenden 13, 14 für verschiedene Formen von DurchgangsÖffnungen oder Ausnehmungen.

Gemäß einer weiteren Ausführungsform der vorliegenden Erfindung ist der Bezug 5 zumindest teilweise an einer der beiden Blenden 13, 14 angeordnet. Dies kann beispielsweise durch einen Form-, Kraft- und/oder Stoffschluss erfolgen.

Der Tragrahmen 11 und/oder die Blenden 13, 14 können zusätzlich mit Versteifungselementen 27, insbesondere Längsrippen, Querrippen, versehen sein.

Der Tragrahmen 11 ist beispielsweise als Hohlkörper, insbesondere Hohlprofil, ausgebildet. Die Öffnungsränder 26 weisen einen größeren Umfang als ein Hohlprofilgrundkörper des Tragrahmens 11 auf. Die Öffnungsränder 26 sind an Enden des Hohlprofilgrundkörpers, beispielsweise an den Öffnungsenden 25 des Tragrahmens 11, angeordnet. Die Öffnungsränder 26 sind beispielsweise mit den Enden des Hohlprofilgrundkörpers, beispielsweise den Öffnungsenden 25 des Tragrahmens 11, stoffschlüssig, kraftschlüssig und/oder formschlüssig verbunden. Alternativ ist der Hohlprofilgrundkörper mit den Öffnungsrändern 26 einteilig ausgebildet. Die Öffnungsränder 26 bilden beispielsweise abgewinkelte, insbesondere nach außen abgewinkelte, Enden des Hohlprofilgrundkörpers, beispielsweise abgewinkelte Öffnungsenden 25 des Tragrahmens 11. Nach außen bedeutet dabei in eine Richtung von der Durchgangsöffnung 13 weg, beispielsweise in Richtung eines Fahrzeuginnenraums. Die Öffnungsränder 26 sind beispielsweise in Form von nach außen stehenden, insbesondere abstehenden, Flanschen ausgebildet.

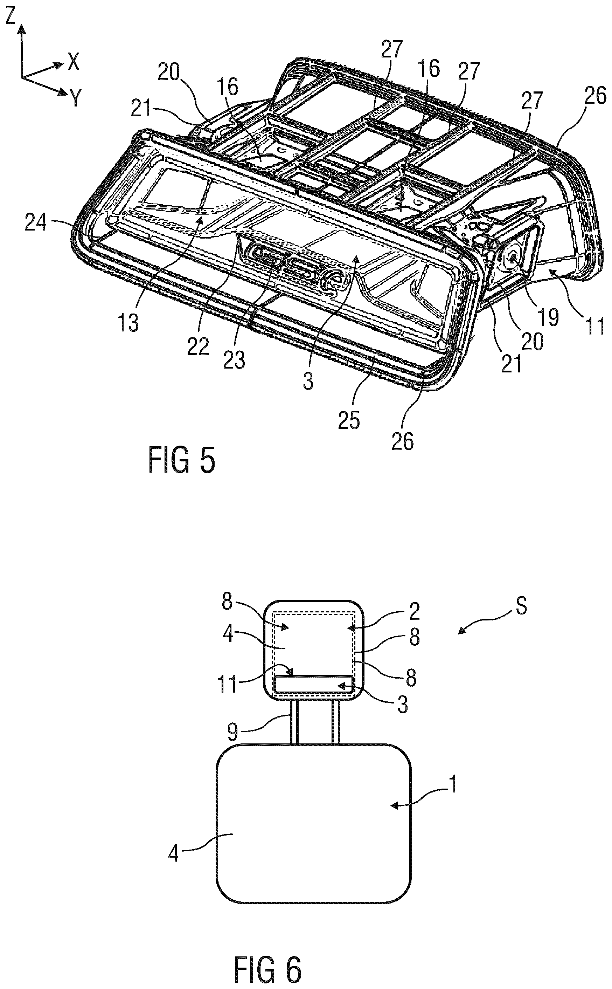

**Figur 5** zeigt im zusammengesetzten Zustand den Tragrahmen 11 und die zwei Blenden 13, 14 für die Durchgangsöffnung 3 der Kopfstütze 2.

**Figur 6** zeigt eine Vorderansicht eines Fahrzeugsitzes S mit einer Kopfstütze 2 und einer Durchgangsöffnung 3 von vorne. Die Kopfstütze 2 weist eine Polsterung 4 auf. Die Kopfstütze 2 ist mittels der Haltestange 9 an einer Rückenlehne 1, insbesondere einer Tragstruktur 7 der Rückenlehne 1, befestigt. Die Kopfstütze 2 umfasst beispielsweise einen Grundkörper 8 und einen Tragrahmen 11. Der Tragrahmen 11 ist mit dem Grundkörper 8 gemeinsam von der Polsterung 4 umgeben. Der Tragrahmen 11 weist die Durchgangsöffnung 3 auf, welche mit einer ersten Blende 13 und einer zweiten Blende 14 zumindest teilweise ausgekleidet ist.

Im dargestellten Ausführungsbeispiel ist der Tragrahmen 11 beispielsweise im Grundkörper 8 der Kopfstütze 2 oder unterhalb des Grundkörpers 8 angeordnet.

### Bezugszeichenliste

- 1: Rückenlehne
- 1.1, 1.2: Außenseite
- 2: Kopfstütze
- 3: Durchgangsöffnung
- 4: Polsterung
- 5: Bezug
- 6: Sitzteil
- 7: Tragstruktur
- 8: Grundkörper
- 9: Haltestange
- 10: Stangenenden
- 11: Tragrahmen
- 12: Hohlraum
- 13: erste Blende
- 13.1: Blendenkörper
- 13.2: Ausnehmung
- 14: zweite Blende
- 14.1: Blendenkörper
- 14.2: Ausnehmung
- 15: erstes Rastelement
- 16: zweites Rastelement
- 17: drittes Rastelement
- 18: viertes Rastelement
- 19: Befestigungselement
- 20: Befestigungskappe
- 21: gerundeter Kappenrand
- 22: Ausnehmung
- 23: Funktionselement
- 24, 24A, 24B: Blendenende
- 25: Öffnungsende
- 26: Öffnungsrand
- 27: Versteifungselement
- 30: Steckverbindung

- MB: mittlerer Bereich
- S: Fahrzeugsitz
- X: Längsrichtung
- Y: Querrichtung
- Z: Vertikalrichtung

## Patentansprüche

1. Kopfstütze (2) für eine Rückenlehne (1), insbesondere eines Fahrzeugsitzes (S),
umfassend zumindest
- einen Grundkörper (8),
- eine Haltestange (9), an dem der Grundkörper (8) angeordnet ist, und
- einen Tragrahmen (11), der an der Haltestange (9) und/oder im Bereich des Grundkörpers (8) angeordnet ist,
wobei der Tragrahmen (11) zumindest eine Durchgangsöffnung (3) aufweist, welche mit einer ersten Blende (13) und einer zweiten Blende (14) zumindest teilweise ausgekleidet ist, **dadurch gekennzeichnet, dass** die erste Blende (13) und die zweite Blende (14) in der Durchgangsöffnung (3) derart angeordnet sind, dass deren Blendenenden (24, 24A, 24B) innerhalb der Durchgangsöffnung (3) angeordnet sind.

2. Kopfstütze (2) nach Anspruch 1, wobei der Tragrahmen (11) zwischen zwei Stangenenden (10) der Haltestange (9) angeordnet ist und wobei die Durchgangsöffnung (3) sich zwischen den Stangenenden (10) der Haltestange (9) erstreckt.

3. Kopfstütze (2) nach Anspruch 1 oder 2, wobei der Tragrahmen (11) am und/oder im Grundkörper (8) derart angeordnet ist, dass die Durchgangsöffnung (3) sich in Längsausdehnungsrichtung des Grundkörpers (8) und/oder sich durch einen gesamten Querschnitt des Grundkörpers (8) erstreckt.

4. Kopfstütze (2) nach einem der vorhergehenden Ansprüche, wobei zumindest eine der Blenden (13, 14) einen Blendenkörper (13.1, 14.1) mit einer Ausnehmung (13.2, 14.2) aufweist.

5. Kopfstütze (2) nach Anspruch 4, wobei ein erstes Blendenende (24, 24A) des Blendenkörpers (13.1, 14.1) einen größeren Umfang als ein zweites Blendenende (24, 24B) des Blendenkörpers (13.1, 14.1) aufweist.

6. Kopfstütze (2) nach einem der Ansprüche 4 oder 5, wobei die Blendenkörper (13.1, 14.1) konisch zulaufend ausgebildet sind.

7. Kopfstütze (2) nach einem der vorhergehenden Ansprüche, wobei die Blendenenden (24, 24A) in einem Abstand zu Öffnungsenden (25) der Durchgangsöffnung (3) angeordnet sind.

8. Kopfstütze (2) nach Anspruch 6, wobei die Durchgangsöffnung (3) an ihren Öffnungsenden (25) gerundete Öffnungsränder (26) mit einem Radius von gleich oder größer 2,5 mm, insbesondere von 5 mm, aufweist.

9. Kopfstütze (2) nach einem der vorhergehenden Ansprüche, wobei zumindest eine der Blenden (13, 14) mit dem Tragrahmen (11), insbesondere rastend, verbunden ist und wobei die Blenden (13, 14) miteinander, insbesondere rastend, verbunden sind.

10. Kopfstütze (2) nach einem der vorhergehenden Ansprüche, wobei die erste Blende (13) erste Rastelemente (15) aufweist, welche in korrespondierende zweite Rastelemente (16) des Tragrahmens (11) im zusammengebauten Zustand rastend eingreifen.

11. Kopfstütze (2) nach einem der vorhergehenden Ansprüche, wobei die zweite Blende (14) auf ihrer Außenseite dritte Rastelemente (17) aufweist, die in korrespondierende vierte Rastelemente (18) der ersten Blende (13) im zusammengebauten Zustand rastend eingreifen.

12. Kopfstütze (2) nach einem der vorhergehenden Ansprüche, wobei die erste Blende (13) zusätzlich eine Ausnehmung (22) zur Aufnahme und Halterung eines Funktionselements (23), wie eines Schriftzuges oder eines Leuchtmittels, umfasst.

13. Kopfstütze (2) nach einem der vorhergehenden Ansprüche, wobei im verbundenen Zustand der Blendenkörper (13.1, 14.1) die Ausnehmungen (13.2, 14.2) derart miteinander verbunden sind, dass diese eine durchgängige Öffnung ausbilden.

14. Rückenlehne (1) für einen Sitz, insbesondere Fahrzeugsitz (S), umfassend zumindest eine Tragstruktur (7) und eine an der Tragstruktur (7) angeordnete Kopfstütze (2) nach einem der vorhergehenden Ansprüche 1 bis 13.

15. Rückenlehne (1) nach Anspruch 14, wobei der Tragrahmen (11) zwischen einem oberen Ende der Tragstruktur (7) und einem unteren Ende des Grundkörpers (8) angeordnet ist.

## Claims

1. Head restraint (2) for a backrest (1), in particular of a vehicle seat (S),
comprising at least
- a basic body (8),
- a holding rod (9), on which the basic body (8) is arranged, and
- a supporting frame (11), which is arranged on the holding rod (9) and/or in the region of the basic body (8),
wherein the supporting frame (11) has at least one through opening (3), which is at least partially lined with a first cover (13) and a second cover (14), **characterized in that** the first cover (13) and the second cover (14) are arranged in the through opening (3) in such a way that their cover ends (24, 24A, 24B) are arranged within the through opening (3).

2. Head restraint (2) according to Claim 1, wherein the supporting frame (11) is arranged between two rod ends (10) of the holding rod (9), and wherein the through opening (3) extends between the rod ends (10) of the holding rod (9).

3. Head restraint (2) according to Claim 1 or 2, wherein the supporting frame (11) is arranged on and/or in the basic body (8) in such a way that the through opening (3) extends in the direction of longitudinal extent of the basic body (8) and/or through an entire cross section of the basic body (8).

4. Head restraint (2) according to any one of the preceding claims, wherein at least one of the covers (13, 14) has a cover body (13.1, 14.1) with a recess (13.2, 14.2).

5. Head restraint (2) according to Claim 4, wherein a first cover end (24, 24A) of the cover body (13.1, 14.1) has a larger circumference than a second cover end (24, 24B) of the cover body (13.1, 14.1).

6. Head restraint (2) according to either of Claims 4 and 5, wherein the cover bodies (13.1, 14.1) are conically tapered.

7. Head restraint (2) according to any one of the preceding claims, wherein the cover ends (24, 24A) are arranged at a distance from the opening ends (25) of the through opening (3).

8. Head restraint (2) according to Claim 6, wherein the through opening (3) has rounded opening edges (26) at its opening ends (25) with a radius of equal to or greater than 2.5 mm, in particular of 5 mm.

9. Head restraint (2) according to any one of the preceding claims, wherein at least one of the covers (13, 14) is connected, in particular in a latching manner, to the supporting frame (11), and wherein the covers (13, 14) are connected, in particular in a latching manner, to each other.

10. Head restraint (2) according to any one of the preceding claims, wherein the first cover (13) has first latching elements (15), which, in the assembled state, engage in a latching manner in corresponding second latching elements (16) of the supporting frame (11).

11. Head restraint (2) according to any one of the preceding claims, wherein the second cover (14) on its outside has third latching elements (17), which, in the assembled state, engage in a latching manner in corresponding fourth latching elements (18) of the first cover (13).

12. Head restraint (2) according to any one of the preceding claims, wherein the first cover (13) additionally comprises a recess (22) for receiving and holding a functional element (23), such as lettering or a lamp.

13. Head restraint (2) according to any one of the preceding claims, wherein, in the connected state of the cover bodies (13.1, 14.1), the recesses (13.2, 14.2) are connected to each other in such a way that they form a continuous opening.

14. Backrest (1) for a seat, in particular vehicle seat (S), comprising at least one supporting structure (7) and a head restraint (2), which is arranged on the supporting structure (7), according to any one of the preceding Claims 1 to 13.

15. Backrest (1) according to Claim 14, wherein the supporting frame (11) is arranged between an upper end of the supporting structure (7) and a lower end of the basic body (8).

## Revendications

1. Appui-tête (2) pour un dossier (1), en particulier d'un siège de véhicule (S),
comprenant au moins
- un corps de base (8),
- une tige de support (9) sur laquelle est agencé le corps de base (8), et
- un châssis porteur (11) qui est agencé sur la tige de support (9) et/ou dans la zone du corps de base (8),
le châssis porteur (11) comprenant au moins une ouverture traversante (3) qui est au moins partiellement revêtue par un premier cache (13) et un deuxième cache (14), **caractérisé en ce que** le premier cache (13) et le deuxième cache (14) sont agencés dans l'ouverture traversante (3) de telle sorte que leurs extrémités (24, 24A, 24B) de cache sont agencées à l'intérieur de l'ouverture traversante (3).

2. Appui-tête (2) selon la revendication 1, dans lequel le châssis porteur (11) est agencé entre deux extrémités (10) de cache de la tige de support (9) et dans lequel l'ouverture traversante (3) s'étend entre les extrémités (10) de tige de la tige de support (9).

3. Appui-tête (2) selon la revendication 1 ou la revendication 2, dans lequel le châssis porteur (11) est agencé sur et/ou dans le corps de base (8) de telle sorte que l'ouverture traversante (3) s'étend en direction d'extension longitudinale du corps de base (8) et/ou s'étend à travers une section transversale complète du corps de base (8).

4. Appui-tête (2) selon l'une des revendications précédentes, dans lequel au moins l'un des caches (13, 14) comprend un corps de cache (13.1, 14.1) avec un évidement (13.2, 14.2).

5. Appui-tête (2) selon la revendication 4, dans lequel une première extrémité de cache (24, 24A) du corps de cache (13.1, 14.1) présente un périmètre plus grand qu'une deuxième extrémité (24, 24B) de cache du corps de cache (13.1, 14.1).

6. Appui-tête (2) selon l'une des revendications 4 et 5, dans lequel les corps de cache (13.1, 14.1) sont réalisés de manière conique.

7. Appui-tête (2) selon l'une des revendications précédentes, dans lequel les extrémités de cache (24, 24A) sont agencées à une distance des extrémités d'ouverture (25) de l'ouverture traversante (3).

8. Appui-tête (2) selon la revendication 6, dans lequel l'ouverture traversante (3) comprend, à ses extrémités d'ouverture (25), des bords d'ouverture arrondis (26) ayant un rayon égal ou supérieur à 2,5 mm, en particulier de 5 mm.

9. Appui-tête (2) selon l'une des revendications précédentes, dans lequel au moins l'un des caches (13, 14) est relié au châssis porteur (11), notamment par encliquetage, et dans lequel les caches (13, 14) sont reliés entre eux, notamment par encliquetage.

10. Appui-tête (2) selon l'une des revendications précédentes, dans lequel le premier cache (13) comprend des premiers éléments d'encliquetage (15) qui, à l'état assemblé, viennent en engagement par encliquetage dans des deuxièmes éléments d'encliquetage (16) correspondants du châssis porteur (11).

11. Appui-tête (2) selon l'une des revendications précédentes, dans lequel le deuxième cache (14) comprend, sur son côté extérieur, des troisièmes éléments d'encliquetage (17) qui, à l'état assemblé, viennent en engagement par encliquetage dans des quatrièmes éléments d'encliquetage (18) correspondants du premier cache (13).

12. Appui-tête (2) selon l'une des revendications précédentes, dans lequel le premier cache (13) comprend en outre un évidement (22) destiné à recevoir et à maintenir un élément fonctionnel (23), tel qu'une inscription ou un moyen d'éclairage.

13. Appui-tête (2) selon l'une des revendications précédentes, dans lequel, à l'état assemblé des corps de cache (13.1, 14.1), les évidements (13.2, 14.2) sont reliés entre eux de telle sorte qu'ils forment une ouverture continue.

14. Dossier (1) pour un siège, en particulier un siège de véhicule (S), comprenant au moins une structure porteuse (7) et un appui-tête (2) selon l'une des revendications 1 à 13 précédentes, agencé sur la structure porteuse (7).

15. Dossier (1) selon la revendication 14, dans lequel le châssis porteur (11) est agencé entre une extrémité supérieure de la structure porteuse (7) et une extrémité inférieure du corps de base (8).
